(19) Europäisches Patentamt
European Patent Office
Office européen des brevets

(11) **EP 4 700 702 A1**

(12) **EUROPEAN PATENT APPLICATION**
published in accordance with Art. 153(4) EPC

(43) Date of publication:
**25.02.2026 Bulletin 2026/09**

(51) International Patent Classification (IPC):
**G06T 7/11** *(2017.01)*

(21) Application number: **24881392.5**

(22) Date of filing: **08.10.2024**

(86) International application number:
**PCT/CN2024/123414**

(87) International publication number:
**WO 2025/087026 (01.05.2025 Gazette 2025/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **24.10.2023 CN 202311384713**

(71) Applicants:
• **Beijing Wodong Tianjun Information Technology
Co.,
Ltd.
Beijing 100176 (CN)**

• **Beijing Jingdong Century Trading Co., Ltd.
Beijing 100176 (CN)**

(72) Inventors:
• **ZHANG, Xiajie
Beijing 100176 (CN)**
• **DU, Feng
Beijing 100176 (CN)**
• **GUO, Jinghao
Beijing 100176 (CN)**
• **WEI, Wei
Beijing 100176 (CN)**

(74) Representative: **Page White Farrer
Bedford House
21a John Street
London WC1N 2BF (GB)**

(54) **IMAGE ANNOTATION METHOD AND APPARATUS, AND STORAGE MEDIUM**

(57) The present disclosure relates to the field of image processing, and provides an image annotation method and apparatus, and a storage medium. The method comprises: on the basis of a multi-view picture set of an object, constructing a three-dimensional model of the object; adjusting the pose of the three-dimensional model of the object, so that the projection of the three-dimensional model of the object on a picture to be annotated completely overlaps an image of the object in the picture to be annotated; and annotating the projection when said projection completely overlaps said image as a segmentation result of the image of the object in the picture to be annotated. By adjusting the pose of the object in the picture to replace the annotation of dense point positions (hundreds and thousands of point positions) of the boundary of an object in one picture, annotation efficiency is improved. By constructing the three-dimensional model of the object, and using the projection of the unified three-dimensional model in different poses to annotate the object in the picture, the uniformity of the boundaries of the object at different viewing angles can be ensured, thereby improving annotation quality. Especially in a multi-view image segmentation scenario, higher annotation efficiency and annotation quality are achieved.

```
┌──────────────┐     ┌─────────────────────────────────────────┐
│ multi-view   │     │ a three-dimensional model of an object is │ ─ 110
│ picture set of │──▶│ constructed based on a multi-view picture │
│ object       │     │           set of the object               │
└──────────────┘     └─────────────────────────────────────────┘
                                      │
                                      ▼
┌──────────────┐     ┌─────────────────────────────────────────┐
│ to-be-annotated│    │ a position or orientation of the three-   │ ─ 120
│ picture of    │──▶ │ dimensional model of the object is        │
│ object       │     │ adjusted to make a projection             │
└──────────────┘     │ of the three-dimensional model of the object on a │
                     │ to-be-annotated picture fully align with an image of │
                     │     the object in the to-be-annotated picture    │
                     └─────────────────────────────────────────┘
                                      │
                                      ▼
                     ┌─────────────────────────────────────────┐
                     │ the fully aligned projection is annotated as a │ ─ 130
                     │ segmentation result of the image of the object in │
                     │       the to-be-annotated picture          │
                     └─────────────────────────────────────────┘
```

Fig.1

Processed by Luminess, 75001 PARIS (FR)

## Description

### CROSS-REFERENCE TO RELATED APPLICATIONS

The present disclosure is based on and claims priority to CN application No. 202311384713.8, filed on October 24, 2023, the disclosure of which is incorporated into this disclosure by reference in its entirety.

### TECHNICAL FIELD

The present disclosure relates to the field of image processing, and in particular, to an image annotation method, an image annotation apparatus, and a non-transitory computer-readable storage medium.

### BACKGROUND

Image segmentation annotation serves image segmentation visual tasks. Image segmentation is a very common computer vision task; in order to enable an image segmentation algorithm to have high-quality learning data, it is needed to annotate a batch of image segmentation results first, and train the image segmentation algorithm using the annotated label. The image segmentation annotation method can be roughly divided into full-manual annotation and man-machine collaborative annotation, both annotating the outline of an object with points and lines by means of manual work or algorithms.

The full-manual annotation is to annotate the boundary of an object in a picture with points and lines completely by people. For an irregularly shaped object, the full-manual annotation is a relatively heavy task. Due to human subjectivity, the annotation quality cannot necessarily meet actual requirements, and people are required to invest for a longer time to exchange the improvement of the annotation quality. One case is to annotate a curved boundary, and enough dense points need to be annotated to fit the boundary of the object well, but more dense points need more workload. And for pictures of the same object under different views, the uniformity of the boundary is difficult to keep by manual annotation.

The man-machine cooperative annotation reduces the manual burden to a certain extent; firstly, an approximate position of a to-be-annotated object is indicated manually, such as clicking on the object or circling the object, and then the outline of the object is calculated by an algorithm; the outline is still rough and needs to be refined manually, thereby achieving the man-machine cooperative annotation work. In fact, the manual refining work is not easy, and the workload is still larger.

Therefore, the image segmentation annotation method in the related art has great difficulty in improving the annotation quality and increasing the annotation efficiency.

### SUMMARY

Some embodiments of the present disclosure provide an image annotation method, comprising: constructing a three-dimensional model of an object based on a multi-view picture set of the object; adjusting a position or orientation of the three-dimensional model of the object to make a projection of the three-dimensional model of the object on a to-be-annotated picture fully align with an image of the object in the to-be-annotated picture; and annotating the fully aligned projection as a segmentation result of the image of the object in the to-be-annotated picture.

In some embodiments, the constructing the three-dimensional model of the object based on the multi-view picture set of the object comprises: determining camera intrinsic parameters and camera extrinsic parameters corresponding to each picture of the object in the multi-view picture set of the object; and constructing the three-dimensional model of the object by using a reconstruction algorithm from two-dimensional pictures to the three-dimensional model, according to the each picture of the object in the multi-view picture set of the object and the camera intrinsic parameters and the camera extrinsic parameters corresponding to the each picture.

In some embodiments, the camera intrinsic parameters and the camera extrinsic parameters corresponding to the each picture of the object in the multi-view picture set of the object are determined by using a colmap algorithm.

In some embodiments, the three-dimensional model of the object is constructed by using a NeuS algorithm.

In some embodiments, the adjusting the position or orientation of the three-dimensional model of the object to make the projection of the three-dimensional model of the object on the to-be-annotated picture fully align with the image of the object in the to-be-annotated picture comprises: determining a first projection of the three-dimensional model of the object under an initial position and orientation on the to-be-annotated picture, the initial position and orientation being determined according to camera extrinsic parameters of the to-be-annotated picture; and if the first projection does not fully align with the image of the object in the to-be-annotated picture, adjusting the position or orientation of the three-dimensional model of the object, and determining a second projection of the three-dimensional model of the object under an adjusted position and orientation on the to-be-annotated picture, until the second projection fully aligns with the image of the object in the to-be-annotated picture.

In some embodiments, the determining the first projection of the three-dimensional model of the object under the initial position and orientation on the to-be-annotated picture comprises: determining a second coordinate representation of the three-dimensional model of the object under the initial position and orientation in a camera coordinate system, according to a first coordinate representation of the three-dimensional model of the object in a world coordinate system and the initial position and orientation; and determining a third coordinate representation of the three-dimensional model of the object under the initial position and orientation in a screen coordinate system as the first projection, according to the second coordinate representation of the three-dimensional model of the object under the initial position and orientation in the camera coordinate system.

In some embodiments, the determining the second projection of the three-dimensional model of the object under the adjusted position and orientation on the to-be-annotated picture, comprises: determining a fourth coordinate representation of the three-dimensional model of the object under the adjusted position and orientation in a camera coordinate system, according to a first coordinate representation of the three-dimensional model of the object in a world coordinate system, the initial position and orientation, an offset of a center of the three-dimensional model of the object from a coordinate origin and a position or orientation adjustment quantity; and determining a fifth coordinate representation of the three-dimensional model of the object under the adjusted position and orientation in a screen coordinate system as the second projection, according to the fourth coordinate representation of the three-dimensional model of the object under the adjusted position and orientation in the camera coordinate system.

In some embodiments, the offset of the center of the three-dimensional model of the object from the coordinate origin comprises: a first offset in a direction from the center of the three-dimensional model of the object to the coordinate origin, and a second offset in a direction from the coordinate origin to the center of the three-dimensional model of the object.

In some embodiments, the position or orientation adjustment quantity comprises: a position or orientation rotation quantity and a position or orientation offset.

In some embodiments, the determining the fourth coordinate representation of the three-dimensional model of the object under the adjusted position and orientation in a camera coordinate system comprises: multiplying the position or orientation offset, the second offset, the position or orientation rotation quantity, the first offset, the initial position and orientation and the first coordinate representation in sequence, to obtain the fourth coordinate representation.

In some embodiments, the position or orientation rotation quantity is determined by: projecting a minimum sphere that encloses the three-dimensional model of the object as a circle on a screen; determining, according to the circle, a first vector of a starting operation point of position or orientation rotation on the screen in an annotation space and a second vector of an ending operation point of the position or orientation rotation on the screen in the annotation space; determining a rotation axis and a rotation angle from the first vector to the second vector; and transforming the rotation axis and the rotation angle into a rotation matrix as the position or orientation rotation quantity.

In some embodiments, the position or orientation offset is determined by: weighting a position or orientation adjustment component in each direction of the screen with a preset coefficient in the direction, to obtain a position or orientation offset component in each direction of the screen; taking a matrix formed by the position or orientation offset components in various directions of the screen as the position or orientation offset.

In some embodiments, the determining the fifth coordinate representation of the three-dimensional model of the object under the adjusted position and orientation in the screen coordinate system comprises: m multiplying a pre-configured screen conversion matrix, a pre-configured clip matrix and a pre-configured projection matrix with the fourth coordinate representation of the three-dimensional model of the object under the adjusted position and orientation in the camera coordinate system in sequence, to obtain the fifth coordinate representation of the three-dimensional model of the object under the adjusted position and orientation in the screen coordinate system..

In some embodiments, the determining the third coordinate representation of the three-dimensional model of the object under the initial position and orientation in a screen coordinate system comprises: multiplying a pre-configured screen conversion matrix, a pre-configured clip matrix and a pre-configured projection matrix with the second coordinate representation of the three-dimensional model of the object under the initial position and orientation in the camera coordinate system in sequence, to obtain the third coordinate representation of the three-dimensional model of the object under the initial position and orientation in the screen coordinate system.

Some embodiments of the present disclosure provide an image annotation apparatus, comprising: a memory; and a processor coupled to the memory, the processor configured to perform the image annotation method based on instructions stored in the memory.

Some embodiments of the present disclosure provide an image annotation apparatus, comprising: modules for performing the image annotation method.

Some embodiments of the present disclosure provide a non-transitory computer readable storage medium storing a computer program which, when executed by a processor, implements the steps of the image annotation method.

Some embodiments of the present disclosure provide a computer program comprising: instructions which, when executed by a processor, cause the processor to perform the image annotation method.

## BRIEF DESCRIPTION OF THE DRAWINGS

The drawings that are required to be used in the description of the embodiments or related art will be briefly described below. The present disclosure will be more clearly understood from the following detailed description, which proceeds with reference to the accompanying drawings.

Obviously, the drawings in the following description are merely some embodiments of the present disclosure and other drawings may be derived from these drawings by those of ordinary skill in the art without creative efforts.

FIG. 1 illustrates a schematic flow diagram of an image annotation method according to some embodiments of the present disclosure.

FIG. 2 illustrates a schematic flow diagram of constructing a three-dimensional model of an object, according to some embodiments of the present disclosure.

FIG. 3 illustrates a schematic flow diagram of adjusting a position or orientation of the three-dimensional model of the object to make a projection of the three-dimensional model of the object on a to-be-annotated picture fully align with an image of the object in the to-be-annotated picture, according to some embodiments of the present disclosure.

FIG. 4 illustrates a schematic diagram of calculating a position or orientation rotation quantity according to some embodiments of the present disclosure.

FIG. 5 illustrates a schematic diagram of annotating an image of the object in a to-be-annotated picture, by adjusting a position or orientation of the three-dimensional model of the object to make a projection of the three-dimensional model of the object on the to-be-annotated picture fully align with the image of the object in the to-be-annotated picture, according to some embodiments of the present disclosure.

FIG. 6 illustrates a schematic diagram of an image annotation apparatus according to some embodiments of the present disclosure.

FIG. 7 illustrates a schematic diagram of an image annotation apparatus according to some embodiments of the present disclosure.

## DETAILED DESCRIPTION

The technical solutions in the embodiments of the present disclosure will be clearly and completely described below with reference to the drawings in the embodiments of the present disclosure.

Unless specifically stated otherwise, the terms such as "first", "second" in this disclosure are used to distinguish different objects, and are not used to indicate a meaning such as size or time sequence.

According to the embodiments of the disclosure, a three-dimensional model of an object is constructed based on a multi-view picture set of the object; a position or orientation of the three-dimensional model of the object is adjusted to make a projection of the three-dimensional model of the object on a to-be-annotated picture fully align with an image of the object in the to-be-annotated picture; and the fully aligned projection is annotated as a segmentation result of the image of the object in the to-be-annotated picture. By adjusting the position or orientation of the object in the picture, instead of annotating dense point positions (hundreds of point positions) on the boundary of the object in one picture, the annotation efficiency is improved. By constructing the three-dimensional model of the object and annotating the object in the picture by using projections of the unified three-dimensional model in different position or orientations, uniformity of the boundary of the object under different views can be ensured, improving the annotation quality. Particularly, in a multi-view image segmentation scene, higher annotation efficiency and annotation quality are realized.

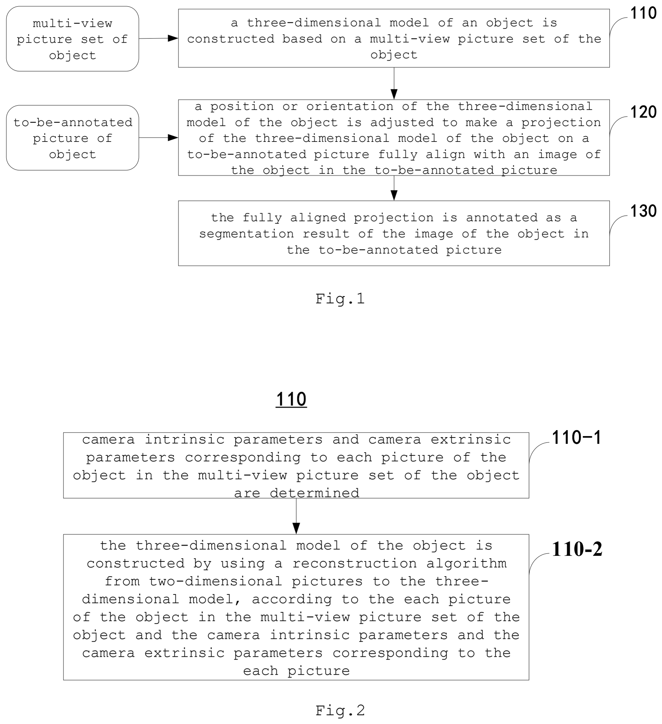

FIG. 1 illustrates a schematic flow diagram of an image annotation method according to some embodiments of the present disclosure.

As shown in FIG. 1, the image annotation method of the embodiment comprises steps 110-130.

At step 110, a three-dimensional model of an object is constructed based on a multi-view picture set of the object.

In some embodiments, as shown in FIG. 2, the step 110 of constructing a three-dimensional model of an object based on a multi-view picture set of the object, comprises: steps 110-1 and 110-2.

At step 110-1, camera intrinsic parameters and camera extrinsic parameters corresponding to each picture of the object in the multi-view picture set of the object are determined.

The multi-view picture set of the object comprises pictures of the object under different views, which are the multi-view picture set of the object.

The camera intrinsic parameters and camera extrinsic parameters corresponding to each picture of the object in the multi-view picture set of the object are determined by using a colmap algorithm. That is, the picture of the object under each view in the multi-view picture set is respectively input into the colmap algorithm, which can output the camera intrinsic parameters and camera extrinsic parameters corresponding to the picture. The COLMAP algorithm is a three-dimensional reconstruction algorithm combining SfM (Structure-from-Motion) and multiple View Stereo (MVS) .

Camera intrinsic parameters are generally labelled as $K \in \mathbb{R}^{4 \times 4}$ , which describes intrinsic parameters of the camera, comprising focal length f, location of principal point p, and size ratio of pixels to real environment, etc., which are intrinsic properties of the camera.

Camera extrinsic parameters are generally labelled as $M_{init} \in \mathbb{R}^{4 \times 4}$ , comprising a rotation matrix R and a translation vector T. The rotation matrix R can be converted into three-dimensional rotation vectors, respectively representing rotation angles around three axes x, y, and z. The translation vector T represents translation quantities in the x, y, z directions, respectively.

At step 110-2, the three-dimensional model of the object is constructed by using a reconstruction algorithm from two-dimensional pictures to the three-dimensional model, according to the each picture of the object in the multi-view picture set of the object and the camera intrinsic parameters and the camera extrinsic parameters corresponding to the each picture.

The three-dimensional model of the object is constructed, for example, by using a NeuS algorithm. Each picture of the object in the multi-view picture set of the object and the camera intrinsic parameters and camera extrinsic parameters corresponding to the each picture are input into the NeuS algorithm, which outputs the three-dimensional model ( $O_W \in \mathbb{R}^{4 \times n}$ ) of the object through several iterations. The three-dimensional model consists of a series of three-dimensional points, which can be represented as homogeneous coordinates of n three-dimensional points. The NeuS algorithm is a neural rendering method for describing a surface by using a Signed Distance Field (SDF), and can reconstruct a high-fidelity three-dimensional model from multi-view pictures.

At step 120, a position or orientation of the three-dimensional model of the object is adjusted to make a projection of the three-dimensional model of the object on a to-be-annotated picture fully align with an image of the object in the to-be-annotated picture, thereby annotating the image of the object in the to-be-annotated picture.

In some embodiments, the position or orientation of the three-dimensional model of the object can be manually adjusted to make a projection of the three-dimensional model of the object on a to-be-annotated picture fully align with an image of the object in the to-be-annotated picture, thereby manually annotating the image of the object in the to-be-annotated picture.

In other embodiments, the position or orientation of the three-dimensional model of the object can be machine-adjusted to make a projection of the three-dimensional model of the object on a to-be-annotated picture fully align with an image of the object in the to-be-annotated picture, thereby automatically annotating the image of the object in the to-be-annotated picture.

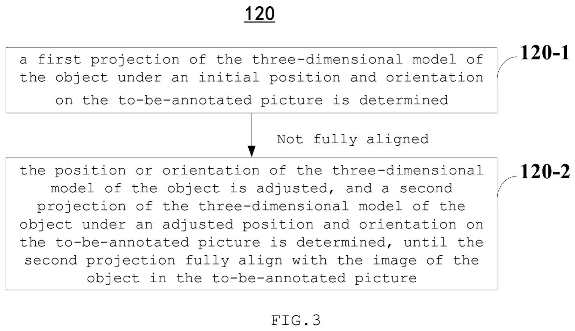

In some embodiments, as shown in FIG. 3, the step 120 of adjusting a position or orientation of the three-dimensional model of the object to make a projection of the three-dimensional model of the object on a to-be-annotated picture fully align with an image of the object in the to-be-annotated picture, comprises: steps 120-1 and 120-2.

At step 120-1, a first projection of the three-dimensional model of the object under an initial position and orientation on the to-be-annotated picture is determined, the initial position and orientation being determined according to camera extrinsic parameters of the to-be-annotated picture.

In some embodiments, camera intrinsic parameters and camera extrinsic parameters of the to-be-annotated picture are determined by using a colmap algorithm, and the camera extrinsic parameters of the to-be-annotated picture are taken as an initial position and orientation.

In some embodiments, the determining a first projection of the three-dimensional model of the object under an initial position and orientation on the to-be-annotated picture, comprises: determining a second coordinate representation of the three-dimensional model of the object under the initial position and orientation in a camera coordinate system, according to a first coordinate representation of the three-dimensional model of the object in a world coordinate system and the initial position and orientation; and determining a third coordinate representation of the three-dimensional model of the object under the initial position and orientation in a screen coordinate system as the first projection, according to the second coordinate representation of the three-dimensional model of the object under the initial position and orientation in the camera coordinate system.

The determining the second coordinate representation of the three-dimensional model of the object under the initial position and orientation in the camera coordinate system, comprises: multiplying the initial position and orientation $M_{init}$ and the first coordinate representation $O_W$ of the three-dimensional model of the object in the world coordinate system, to obtain the second coordinate representation $O_C$ of the three-dimensional model of the object under the initial position and orientation in the camera coordinate system, which is expressed as follows: $O_C = M_{init} * O_W$.

The determining the third coordinate representation of the three-dimensional model of the object under the initial position and orientation in the screen coordinate system, comprises: multiplying pre-configured screen conversion matrix $M_{screen}$, clip matrix $M_{clip}$ and projection matrix $M_{proj}$ with the second coordinate representation $O_C$ of the three-dimensional model of the object under the initial position and orientation in the camera coordinate system in sequence, to obtain the third coordinate representation $O_s$ of the three-dimensional model of the object under the initial position and orientation in the screen coordinate system, which is expressed as follows: $\boldsymbol{O_s} = \boldsymbol{M_{screen}} * \boldsymbol{M_{clip}} * \boldsymbol{M_{proj}} * \boldsymbol{O_C}$, wherein the screen conversion matrix $\boldsymbol{M_{screen}}$, clip matrix $\boldsymbol{M_{clip}}$ and projection matrix $\boldsymbol{M_{proj}}$ are determined by an Application Programming Interface (API) configuration of OpenGL.

Since the initial position and orientation calculated by the colmap may be inaccurate, the projection will deviate from an outline of the object in the picture. And the subsequent annotation work is to adjust the position or orientation on the basis of the initial position and orientation to obtain an adjusted position and orientation to make the projection of the three-dimensional model fully align as much as possible with the outline of the object in the picture.

At step 120-2, if the first projection does not fully align with the image of the object in the to-be-annotated picture, the position or orientation of the three-dimensional model of the object is adjusted, and a second projection of the three-dimensional model of the object under an adjusted position and orientation on the to-be-annotated picture is determined, until the second projection fully align with the image of the object in the to-be-annotated picture.

In some embodiments, the determining a second projection of the three-dimensional model of the object under an adjusted position and orientation on the to-be-annotated picture, comprises: determining a fourth coordinate representation of the three-dimensional model of the object under the adjusted position and orientation in a camera coordinate system, according to a first coordinate representation of the three-dimensional model of the object in a world coordinate system, the initial position and orientation, an offset of a center of the three-dimensional model of the object from a coordinate origin and a position or orientation adjustment quantity; and determining a fifth coordinate representation of the three-dimensional model of the object under the adjusted position and orientation in a screen coordinate system as the second projection, according to the fourth coordinate representation of the three-dimensional model of the object under the adjusted position and orientation in the camera coordinate system.

The offset of the center of the three-dimensional model of the object from the coordinate origin comprises: a first offset in a direction from the center of the three-dimensional model of the object to the coordinate origin, and a second offset in a direction from the coordinate origin to the center of the three-dimensional model of the object. The position or orientation adjustment quantity comprises: a position or orientation rotation quantity and a position or orientation offset. The first offset and the second offset are offsets of the center $(\boldsymbol{x_{center}}, \boldsymbol{y_{center}}, \boldsymbol{z_{center}})$ of the three-dimensional model from the coordinate origin, so that when the object is adjusted in the annotation process, the object rotates around the center, which is more beneficial to operation.

The first offset $\boldsymbol{T_{goto}}$ is expressed as

$$T_{goto} = \begin{bmatrix} 0 & 0 & 0 & -x_{center} \\ 0 & 0 & 0 & -y_{center} \\ 0 & 0 & 0 & -z_{center} \\ 0 & 0 & 0 & 1 \end{bmatrix}.$$

The second offset $\boldsymbol{T_{back}}$ is expressed as

$$T_{back} = \begin{bmatrix} 0 & 0 & 0 & x_{center} \\ 0 & 0 & 0 & y_{center} \\ 0 & 0 & 0 & z_{center} \\ 0 & 0 & 0 & 1 \end{bmatrix}.$$

The determining the fourth coordinate representation of the three-dimensional model of the object under the adjusted position and orientation in the camera coordinate system, comprises: multiplying the position or orientation offset $\boldsymbol{T_{anno}}$, the second offset $\boldsymbol{T_{back}}$, the position or orientation rotation quantity $\boldsymbol{R_{anno}}$, the first offset $\boldsymbol{T_{goto}}$, the initial position and orientation $\boldsymbol{M_{init}}$, and the first coordinate representation $\boldsymbol{O_W}$ in sequence, to obtain the fourth coordinate representation $\boldsymbol{O'_C}$, which is expressed as follows:

$$O'_C = T_{anno} * T_{back} * R_{anno} * T_{goto} * M_{init} * O_W.$$

The determining the fifth coordinate representation of the three-dimensional model of the object under the adjusted position and orientation in the screen coordinate system, comprises: multiplying a pre-configured screen conversion matrix $\boldsymbol{M_{screen}}$, a pre-configured clip matrix $\boldsymbol{M_{clip}}$ and a pre-configured projection matrix $\boldsymbol{M_{proj}}$ with the fourth coordinate representation $\boldsymbol{O'_C}$ of the three-dimensional model of the object under the adjusted position and orientation in the camera coordinate system in sequence, to obtain the fifth coordinate representation $\boldsymbol{O'_s}$ of the three-dimensional model of the object under the adjusted position and orientation in the screen coordinate system, which is expressed as follows:

$$O'_s = M_{screen} * M_{clip} * M_{proj} * O'_C.$$

The position or orientation rotation quantity $R_{anno}$ (rotation matrix) and the position or orientation offset $T_{anno}$ (offset matrix) adjusted during manual annotation can be determined by the operation of the mouse on the screen. For each micro-operation, when the computer detects a change of the mouse on the screen, the operation of the mouse on the screen is converted into a corresponding annotation quantity.

In some embodiments, the position or orientation offset is determined by: weighting a position or orientation adjustment components in each direction of the screen with a preset coefficient in the corresponding direction, to obtain a position or orientation offset component in each direction of the screen, a matrix formed by the position or orientation offset components in various directions of the screen being taken as the position or orientation offset.

For the position or orientation offset, x and y components can be adjusted through a right button of a mouse, and z components can be adjusted through a roller, namely the position or orientation offset components in various directions, $\Delta t_x = \Delta x * \alpha$, $\Delta t_y = \Delta y * \beta$, $\Delta t_z = \Delta z * \gamma$, where $\alpha$, $\beta$, $\gamma$ (coefficients) are empirical values and are determined by actual debugging, and the values are $\alpha = 0.0002$, $\beta = 0.0002$, $\gamma = 0.001$ in the embodiment. Then the offset matrix $T_{anno}$ can be expressed as follows:

$$T_{anno} = \begin{bmatrix} 0 & 0 & 0 & \Delta t_x \\ 0 & 0 & 0 & \Delta t_y \\ 0 & 0 & 0 & \Delta t_z \\ 0 & 0 & 0 & 1 \end{bmatrix}.$$

In some embodiments, the position or orientation rotation quantity is determined by: projecting a minimum sphere that encloses the three-dimensional model of the object as a circle on a screen; determining, according to the circle, a first vector $\overrightarrow{p_A}$ of a starting operation point of position or orientation rotation on the screen in an annotation space and a second vector $\overrightarrow{p_B}$ of an ending operation point of the position or orientation rotation on the screen in the annotation space; determining a rotation axis $\vec{n}$ and a rotation angle $\theta$ from the first vector to the second vector; and transforming the rotation axis and the rotation angle into a rotation matrix as the position or orientation rotation quantity.

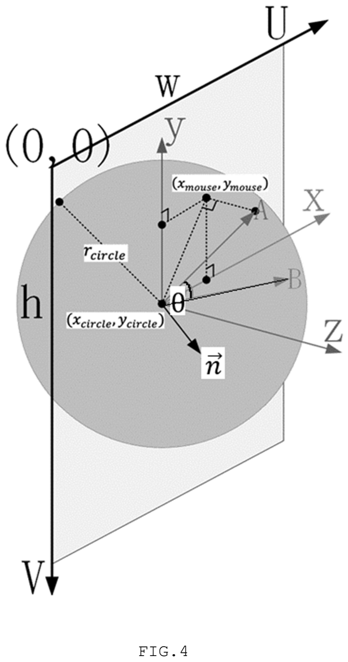

FIG. 4 illustrates a schematic diagram of calculating the position or orientation rotation quantity according to some embodiments of the present disclosure.

For the position or orientation rotation quantity, it can be realized by dragging a left button of a mouse on the screen. Firstly, draw a minimum sphere that encloses the three-dimensional model on the screen by taking the center of the three-dimensional model as the center of the sphere; the projection of the sphere on the screen is a circle with the center $(x_{circle}, y_{circle})$ and radius $r_{circle}$, and the variables here are all in units of pixels. For the starting operation point A on the screen, their pixel coordinates on the screen are $(x_{mouse}, y_{mouse})$, and a rotation quantity resulting from dragging the point A to an ending operation point B is to be calculated.

For the point A on the screen, their pixel coordinates on the screen are $(x_{mouse}, y_{mouse})$, and their coordinates in the annotation space are $(p_x, p_y, p_z)$, then the vector representation in the annotation space can be obtained as follows:

$$\overrightarrow{p_A} = \begin{bmatrix} p_x \\ p_y \\ p_z \end{bmatrix} = \begin{bmatrix} x_{mouse} - x_{circle} \\ y_{circle} - y_{mouse} \\ \sqrt{\min\left(0, r_{circle}^2 - ((x_{mouse} - x_{circle})^2 + (y_{circle} - y_{mouse})^2)\right)} \end{bmatrix}.$$

When the user presses the left button and drags from the point A to the point B on the screen, the corresponding annotation space is dragged from vector $\overrightarrow{p_A}$ to vector $\overrightarrow{p_B}$ ($\overrightarrow{p_B}$ can be calculated by referring to the calculation of $\overrightarrow{p_A}$), and the resulting rotation quantity can be represented by an axis angle, where the rotation axis is $\vec{n}$, and the rotation angle is $\theta$. The specific calculation is as follows:

$$\vec{n} = \begin{bmatrix} n_x \\ n_y \\ n_z \end{bmatrix} = \frac{\overrightarrow{p_A} \times \overrightarrow{p_B}}{|\overrightarrow{p_A} \times \overrightarrow{p_B}|}$$

$$\theta = \cos^{-1}\left(\frac{\overrightarrow{p_A} \cdot \overrightarrow{p_B}}{|\overrightarrow{p_A}| \cdot |\overrightarrow{p_B}|}\right)$$

Based on the rotation axis $\vec{n}$ and the rotation angle θ, it can be transformed into a rotation matrix as follows:

$$R_{anno}$$

$$= \begin{bmatrix} \cos\theta + n_x^2(1-\cos\theta) & -\sin\theta\,n_x + (1-\cos\theta)n_x n_y & \sin\theta\,n_y + (1-\cos\theta)n_x n_z & 0 \\ \sin\theta\,n_z + (1-\cos\theta)n_x n_y & \cos\theta + n_y^2(1-\cos\theta) & -\sin\theta\,n_x + (1-\cos\theta)n_y n_z & 0 \\ -\sin\theta\,n_y + (1-\cos\theta)n_x n_z & \sin\theta\,n_x + (1-\cos\theta)n_y n_z & \cos\theta + n_z^2(1-\cos\theta) & 0 \\ 0 & 0 & 0 & 1 \end{bmatrix}$$

So far, the rotation quantity and the offset of the position or orientation are adjusted once.

At step 130, the fully aligned projection is annotated as a segmentation result of the image of the object in the to-be-annotated picture.

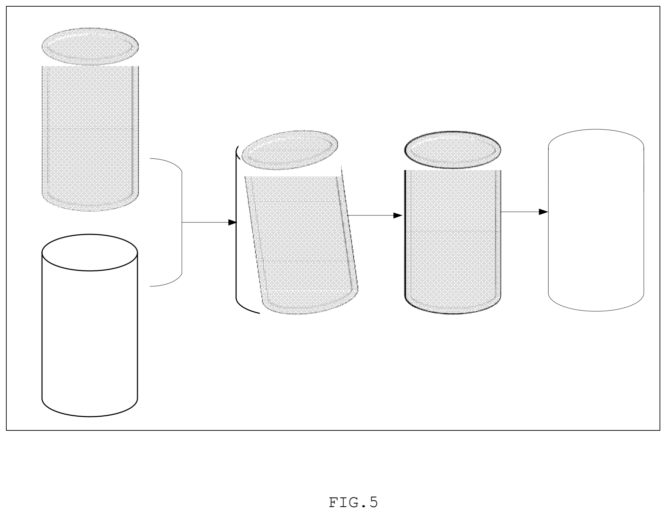

FIG. 5 illustrates a schematic diagram of annotating an image of the object in a to-be-annotated picture, by adjusting a position or orientation of the three-dimensional model of the object to make a projection of the three-dimensional model of the object on the to-be-annotated picture fully align with the image of the object in the to-be-annotated picture, according to some embodiments of the present disclosure.

As shown in FIG. 5, what is arranged on the upper leftmost side is the three-dimensional model of the object, and what is arranged on the lower leftmost side is the to-be-annotated picture of the object, camera extrinsic parameters and camera intrinsic parameters of the to-be-annotated picture are determined, the camera extrinsic parameters of the to-be-annotated picture are taken as the initial position and orientation, the first projection of the three-dimensional model of the object under the initial position and orientation on the to-be-annotated picture is determined, it is found that the first projection does not fully align with the image of the object in the to-be-annotated picture (as shown in the second part of FIG. 5), and the position or orientation (comprising rotation and offset) of the three-dimensional model is adjusted to make the projection of the three-dimensional model on the to-be-annotated picture is closely fitted with the boundary of the object on the to-be-annotated picture (as shown in the third part of FIG. 5). When the projection of the three-dimensional model is closely fitted with the boundary of the object on the picture, manual annotation is completed, and the fully aligned projection is annotated as a segmentation result of the image of the object in the to-be-annotated picture.

By adjusting the position or orientation of the object in the picture, instead of annotating dense point positions (hundreds of point positions) on the boundary of the object in one picture, the annotation efficiency is improved. By constructing the three-dimensional model of the object and annotating the object in the picture by using projections of the unified three-dimensional model in different position or orientations, uniformity of the boundary of the object under different views can be ensured, improving the annotation quality. Particularly, in a multi-view image segmentation scene, higher annotation efficiency and annotation quality are realized.

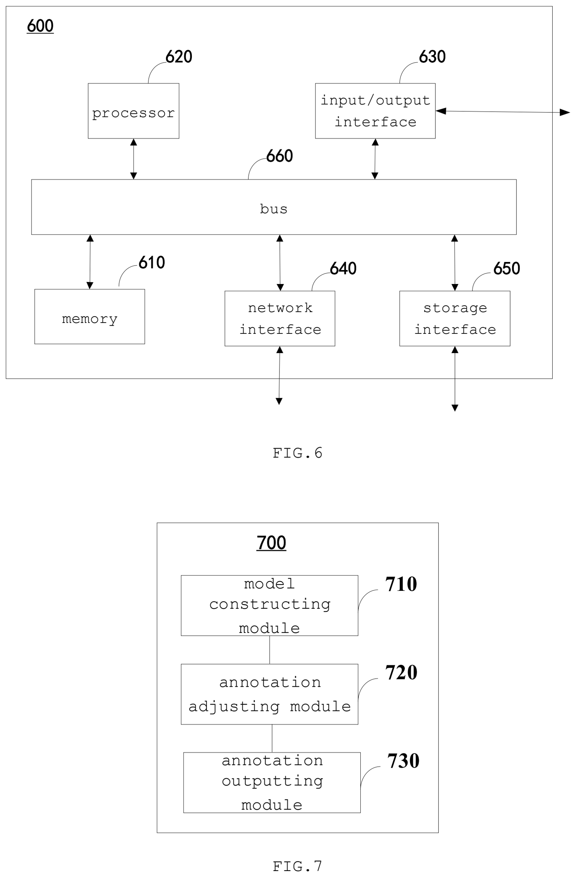

FIG. 6 illustrates a schematic diagram of an image annotation apparatus according to some embodiments of the present disclosure.

As shown in FIG. 6, the image annotation apparatus 600 of the embodiment comprises: a memory 610 and a processor 620 coupled to the memory 610, the processor 620 being configured to perform the image annotation method of any of the foregoing embodiments based on instructions stored in the memory 610.

The image annotation apparatus 600 can also comprise an input/output interface 630, a network interface 640, a storage interface 650, and the like. These interfaces 630, 640, 650 and the memory 610 and the processor 620 may be connected, for example, via a bus 660.

The memory 610 may comprise, for example, system memory, fixed non-volatile storage media, and the like. The system memory stores, for example, an operating system, an application, a Boot Loader, and other programs.

The processor 620 may be implemented by a general-purpose processor, a Digital Signal Processor (DSP), an Application Specific Integrated Circuit (ASIC), a Field Programmable Gate Array (FPGA), or other programmable logic devices, discrete hardware components such as discrete gates or transistors.

The input/output interface 630 provides a connection interface for input/output devices such as a display, a mouse, a keyboard, and a touch screen. The network interface 640 provides a connection interface for various networking devices. The storage interface 650 provides a connection interface for external storage devices such as an SD card and a USB disk. The bus 660 may employ any of various bus architectures. For example, bus architectures comprise, but are not limited to, an Industry Standard Architecture (ISA) bus, a Micro Channel Architecture (MCA) bus, and a Peripheral Component Interconnect (PCI) bus.

FIG. 7 illustrates a schematic diagram of an image annotation apparatus according to some embodiments of the present disclosure.

As shown in FIG. 7, the image annotation apparatus 700 of the embodiment comprises: modules 710-730.

The model constructing module 710 is configured to, construct a three-dimensional model of an object based on a multi-view picture set of the object.

The annotation adjusting module 720 is configured to, adjust a position or orientation of the three-dimensional model of the object to make a projection of the three-dimensional model of the object on a to-be-annotated picture fully align with an image of the object in the to-be-annotated picture.

The annotation outputting module 730 is configured to, annotate the fully aligned projection as a segmentation result of the image of the object in the to-be-annotated picture.

The model constructing module 710 is configured to, determine camera intrinsic parameters and camera extrinsic parameters corresponding to each picture of the object in the multi-view picture set of the object; and construct the three-dimensional model of the object by using a reconstruction algorithm from two-dimensional pictures to the three-dimensional model, according to each picture of the object in the multi-view picture set of the object and the camera intrinsic parameters and camera extrinsic parameters corresponding to the each picture.

The model constructing module 710 is configured to, determine the camera intrinsic parameters and camera extrinsic parameters corresponding to each picture of the object in the multi-view picture set of the object by using a colmap algorithm, or construct the three-dimensional model of the object by using a NeuS algorithm.

The annotation adjusting module 720 is configured to, determine a first projection of the three-dimensional model of the object under an initial position and orientation on the to-be-annotated picture, the initial position and orientation being determined according to camera extrinsic parameters of the to-be-annotated picture; if the first projection does not fully align with the image of the object in the to-be-annotated picture, adjust the position or orientation of the three-dimensional model of the object, and determine a second projection of the three-dimensional model of the object under an adjusted position and orientation on the to-be-annotated picture, until the second projection fully align with the image of the object in the to-be-annotated picture.

The annotation adjusting module 720 is configured to, determine a first projection of the three-dimensional model of the object under an initial position and orientation on the to-be-annotated picture, which comprises:

determining a second coordinate representation of the three-dimensional model of the object under the initial position and orientation in a camera coordinate system, according to a first coordinate representation of the three-dimensional model of the object in a world coordinate system and the initial position and orientation; and
determining a third coordinate representation of the three-dimensional model of the object under the initial position and orientation in a screen coordinate system as the first projection, according to the second coordinate representation of the three-dimensional model of the object under the initial position and orientation in the camera coordinate system.

The annotation adjusting module 720 is configured to, determine a second projection of the three-dimensional model of the object under an adjusted position and orientation on the to-be-annotated picture, which comprises:

determining a fourth coordinate representation of the three-dimensional model of the object under the adjusted position and orientation in a camera coordinate system, according to a first coordinate representation of the three-dimensional model of the object in a world coordinate system, the initial position and orientation, an offset of a center of the three-dimensional model of the object from a coordinate origin and a position or orientation adjustment quantity; and
determining a fifth coordinate representation of the three-dimensional model of the object under the adjusted position and orientation in a screen coordinate system as the second projection, according to the fourth coordinate representation of the three-dimensional model of the object under the adjusted position and orientation in the camera coordinate system.

The offset of the center of the three-dimensional model of the object from the coordinate origin comprises: a first offset in a direction from the center of the three-dimensional model of the object to the coordinate origin, and a second offset in a direction from the coordinate origin to the center of the three-dimensional model of the object.

The position or orientation adjustment quantity comprises: a position or orientation rotation quantity and a position or orientation offset.

The annotation adjusting module 720 is configured to, determine a fourth coordinate representation of the three-dimensional model of the object under the adjusted position and orientation in a camera coordinate system, which comprises: multiplying the position or orientation offset, the second offset, the position or orientation rotation quantity, the first offset, the initial position and orientation and the first coordinate representation in sequence, to obtain the fourth coordinate representation.

The annotation adjusting module 720 is configured to determine the position or orientation rotation quantity by:

projecting a minimum sphere that encloses the three-dimensional model of the object as a circle on a screen;
determining, according to the circle, a first vector of a starting operation point of position or orientation rotation on the screen in an annotation space and a second vector of an ending operation point of the position or orientation rotation on the screen in the annotation space;

determining a rotation axis and a rotation angle from the first vector to the second vector; and

transforming the rotation axis and the rotation angle into a rotation matrix as the position or orientation rotation quantity.

The annotation adjusting module 720 is configured to determine the position or orientation offset by: weighting position or orientation adjustment component in each direction of the screen with a preset coefficient in the direction, to obtain position or orientation offset component in each direction of the screen, a matrix formed by the position or orientation offset components in various directions of the screen being taken as the position or orientation offset.

The annotation adjusting module 720 is configured to, determine a fifth coordinate representation of the three-dimensional model of the object under the adjusted position and orientation in a screen coordinate system , which comprises: multiplying a pre-configured screen conversion matrix, a pre-configured clip matrix and a pre-configured projection matrix with the fourth coordinate representation of the three-dimensional model of the object under the adjusted position and orientation in the camera coordinate system in sequence, to obtain the fifth coordinate representation of the three-dimensional model of the object under the adjusted position and orientation in the screen coordinate system.

The annotation adjusting module 720 is configured to, determine a third coordinate representation of the three-dimensional model of the object under the initial position and orientation in a screen coordinate system, which comprises: multiplying a pre-configured screen conversion matrix, a pre-configured clip matrix and a pre-configured projection matrix with the second coordinate representation of the three-dimensional model of the object under the initial position and orientation in the camera coordinate system in sequence, to obtain the third coordinate representation of the three-dimensional model of the object under the initial position and orientation in the screen coordinate system.

The disclosed embodiments provide a non-transitory computer readable storage medium storing a computer program which, when executed by a processor, implements the steps of the image annotation method.

(1) An image annotation method, comprising:

constructing a three-dimensional model of an object based on a multi-view picture set of the object;

adjusting a position or orientation of the three-dimensional model of the object to make a projection of the three-dimensional model of the object on a to-be-annotated picture fully align with an image of the object in the to-be-annotated picture; and

annotating the fully aligned projection as a segmentation result of the image of the object in the to-be-annotated picture.

(2) according to (1), constructing the three-dimensional model of the object based on the multi-view picture set of the object comprises:

determining camera intrinsic parameters and camera extrinsic parameters corresponding to each picture of the object in the multi-view picture set of the object; and

constructing the three-dimensional model of the object by using a reconstruction algorithm from two-dimensional pictures to the three-dimensional model, according to the each picture of the object in the multi-view picture set of the object and the camera intrinsic parameters and the camera extrinsic parameters corresponding to the each picture.

(3) according to (2), the camera intrinsic parameters and the camera extrinsic parameters corresponding to the each picture of the object in the multi-view picture set of the object are determined by using a colmap algorithm; or, the three-dimensional model of the object is constructed by using a NeuS algorithm.

(4) according to (1-3), the adjusting the position or orientation of the three-dimensional model of the object to make the projection of the three-dimensional model of the object on the to-be-annotated picture fully align with the image of the object in the to-be-annotated picture comprises:

determining a first projection of the three-dimensional model of the object under an initial position and orientation on the to-be-annotated picture, the initial position and orientation being determined according to camera extrinsic parameters of the to-be-annotated picture; and

if the first projection does not fully align with the image of the object in the to-be-annotated picture, adjusting the position or orientation of the three-dimensional model of the object, and determining a second projection of the three-dimensional model of the object under an adjusted position and orientation on the to-be-annotated picture, until the second projection fully aligns with the image of the object in the to-be-annotated picture.

(5) according to (4), the determining the first projection of the three-dimensional model of the object under the initial position and orientation on the to-be-annotated picture comprises:

determining a second coordinate representation of the three-dimensional model of the object under the initial position and orientation in a camera coordinate system, according to a first coordinate representation of the three-dimensional model of the object in a world coordinate system and the initial position and orientation; and determining a third coordinate representation of the three-dimensional model of the object under the initial position and orientation in a screen coordinate system as the first projection, according to the second coordinate representation of the three-dimensional model of the object under the initial position and orientation in the camera coordinate system.

(6) according to (4-5), determining the second projection of the three-dimensional model of the object under the adjusted position and orientation on the to-be-annotated picture, comprises:

determining a fourth coordinate representation of the three-dimensional model of the object under the adjusted position and orientation in a camera coordinate system, according to a first coordinate representation of the three-dimensional model of the object in a world coordinate system, the initial position and orientation, an offset of a center of the three-dimensional model of the object from a coordinate origin and a position or orientation adjustment quantity; and determining a fifth coordinate representation of the three-dimensional model of the object under the adjusted position and orientation in a screen coordinate system as the second projection, according to the fourth coordinate representation of the three-dimensional model of the object under the adjusted position and orientation in the camera coordinate system.

(7) according to (4-6), the offset of the center of the three-dimensional model of the object from the coordinate origin comprises: a first offset in a direction from the center of the three-dimensional model of the object to the coordinate origin, and a second offset in a direction from the coordinate origin to the center of the three-dimensional model of the object; or, the position or orientation adjustment quantity comprises: a position or orientation rotation quantity and a position or orientation offset.

(8) according to (4-7), the determining the fourth coordinate representation of the three-dimensional model of the object under the adjusted position and orientation in a camera coordinate system comprises: multiplying the position or orientation offset, the second offset, the position or orientation rotation quantity, the first offset, the initial position and orientation and the first coordinate representation in sequence, to obtain the fourth coordinate representation.

(9) according to (4-8), the position or orientation rotation quantity is determined by:

projecting a minimum sphere that encloses the three-dimensional model of the object as a circle on a screen; determining, according to the circle, a first vector of a starting operation point of position or orientation rotation on the screen in an annotation space and a second vector of an ending operation point of the position or orientation rotation on the screen in the annotation space; determining a rotation axis and a rotation angle from the first vector to the second vector; and transforming the rotation axis and the rotation angle into a rotation matrix as the position or orientation rotation quantity.

(10) according to (4-9), the position or orientation offset is determined by: weighting a position or orientation adjustment component in each direction of the screen with a preset coefficient in the direction, to obtain a position or orientation offset component in each direction of the screen; taking a matrix formed by the position or orientation offset components in various directions of the screen as the position or orientation offset.

(11) according to (6-10), determining the fifth coordinate representation of the three-dimensional model of the object under the adjusted position and orientation in the screen coordinate system comprises: multiplying a pre-configured screen conversion matrix, a pre-configured clip matrix and a pre-configured projection matrix with the fourth coordinate representation of the three-dimensional model of the object under the adjusted position and orientation in the camera coordinate system in sequence, to obtain the fifth coordinate representation of the three-dimensional model of the object under the adjusted position and orientation in the screen coordinate system.

(12) according to (5-11), the determining the third coordinate representation of the three-dimensional model of the object under the initial position and orientation in a screen coordinate system comprises: multiplying a pre-configured screen conversion matrix, a pre-configured clip matrix and a pre-configured projection matrix with the second coordinate representation of the three-dimensional model of the object under the initial position and orientation in the camera coordinate system in sequence, to obtain the third coordinate representation of the three-dimensional model of the object under the initial position and orientation in the screen coordinate system.

As will be appreciated by one of skill in the art, the embodiments of the present disclosure may be provided as a method, system, or computer program product. Accordingly, the present disclosure may take the form of an entirely hardware embodiment, an entirely software embodiment or an embodiment combining software and hardware aspects. Furthermore, the present disclosure may take the form of a computer program product embodied on one or more non-transitory computer-readable storage media (comprising, but not limited to, disk storage, CD-ROM, optical storage, etc.) having computer program code embodied therein.

The present disclosure is described with reference to flow and/or block diagrams of the method, apparatus (system), and computer program product according to the embodiments of the disclosure. It will be understood that each flow and/or block of the flow and/or block diagrams, and combinations of flows and/or blocks in the flow and/or block diagrams, can be implemented by computer program instructions. These computer program instructions may be provided to a processor of a general purpose computer, special purpose computer, embedded processor, or other programmable data processing apparatus to produce a machine, such that the instructions, which executed via the processor of the computer or other programmable data processing apparatus, create means for implementing the functions specified in one or more flows in the flow diagram and/or one or more blocks in the block diagram. A computer program product should be understood as a software product, the solution of which is mainly implemented by means of a computer program.

These computer program instructions may also be stored in a computer-readable memory that can direct a computer or other programmable data processing apparatus to function in a particular manner, such that the instructions stored in the computer-readable memory produce an article of manufacture comprising instruction means which implement the functions specified in one or more flows in the flow diagram and/or one or more blocks in the block diagram.

These computer program instructions may also be loaded onto a computer or other programmable data processing apparatus to cause a series of operational steps to be performed on the computer or other programmable apparatus to produce a computer-implemented process, such that the instructions, which executed on the computer or other programmable apparatus, provide steps for implementing the functions specified in one or more flows in the flow diagram and/or one or more blocks in the block diagram.

The above only illustrates preferred embodiments of the present disclosure and not limits the disclosure, and any modifications, equivalents, improvements and the like that are made within the spirit and scope of the present disclosure are intended to be comprised therein.

**Claims**

1. An image annotation method, comprising:

   constructing a three-dimensional model of an object based on a multi-view picture set of the object;
   adjusting a position or orientation of the three-dimensional model of the object to make a projection of the three-dimensional model of the object on a to-be-annotated picture fully align with an image of the object in the to-be-annotated picture; and
   annotating the fully aligned projection as a segmentation result of the image of the object in the to-be-annotated picture.

2. The image annotation method according to claim 1, wherein constructing the three-dimensional model of the object based on the multi-view picture set of the object comprises:

   determining camera intrinsic parameters and camera extrinsic parameters corresponding to each picture of the object in the multi-view picture set of the object; and
   constructing the three-dimensional model of the object by using a reconstruction algorithm from two-dimensional pictures to the three-dimensional model, according to the each picture of the object in the multi-view picture set of the object and the camera intrinsic parameters and the camera extrinsic parameters corresponding to the each picture.

3. The image annotation method according to claim 2, wherein:

   the camera intrinsic parameters and the camera extrinsic parameters corresponding to the each picture of the object in the multi-view picture set of the object are determined by using a colmap algorithm; or,
   the three-dimensional model of the object is constructed by using a NeuS algorithm.

4. The image annotation method according to any of claims 1-3, wherein adjusting the position or orientation of the three-dimensional model of the object to make the projection of the three-dimensional model of the object on the to-be-annotated picture fully align with the image of the object in the to-be-annotated picture comprises:

determining a first projection of the three-dimensional model of the object under an initial position and orientation on the to-be-annotated picture, the initial position and orientation being determined according to camera extrinsic parameters of the to-be-annotated picture; and

if the first projection does not fully align with the image of the object in the to-be-annotated picture, adjusting the position or orientation of the three-dimensional model of the object, and determining a second projection of the three-dimensional model of the object under an adjusted position and orientation on the to-be-annotated picture, until the second projection fully aligns with the image of the object in the to-be-annotated picture.

5. The image annotation method according to claim 4, wherein determining the first projection of the three-dimensional model of the object under the initial position and orientation on the to-be-annotated picture comprises:

determining a second coordinate representation of the three-dimensional model of the object under the initial position and orientation in a camera coordinate system, according to a first coordinate representation of the three-dimensional model of the object in a world coordinate system and the initial position and orientation; and determining a third coordinate representation of the three-dimensional model of the object under the initial position and orientation in a screen coordinate system as the first projection, according to the second coordinate representation of the three-dimensional model of the object under the initial position and orientation in the camera coordinate system.

6. The image annotation method according to claim 4, wherein determining the second projection of the three-dimensional model of the object under the adjusted position and orientation on the to-be-annotated picture, comprises:

determining a fourth coordinate representation of the three-dimensional model of the object under the adjusted position and orientation in a camera coordinate system, according to a first coordinate representation of the three-dimensional model of the object in a world coordinate system, the initial position and orientation, an offset of a center of the three-dimensional model of the object from a coordinate origin and a position or orientation adjustment quantity; and

determining a fifth coordinate representation of the three-dimensional model of the object under the adjusted position and orientation in a screen coordinate system as the second projection, according to the fourth coordinate representation of the three-dimensional model of the object under the adjusted position and orientation in the camera coordinate system.

7. The image annotation method according to claim 6, wherein:

the offset of the center of the three-dimensional model of the object from the coordinate origin comprises: a first offset in a direction from the center of the three-dimensional model of the object to the coordinate origin, and a second offset in a direction from the coordinate origin to the center of the three-dimensional model of the object; or, the position or orientation adjustment quantity comprises: a position or orientation rotation quantity and a position or orientation offset.

8. The image annotation method according to claim 7, wherein determining the fourth coordinate representation of the three-dimensional model of the object under the adjusted position and orientation in a camera coordinate system comprises:
multiplying the position or orientation offset, the second offset, the position or orientation rotation quantity, the first offset, the initial position and orientation and the first coordinate representation in sequence, to obtain the fourth coordinate representation.

9. The image annotation method according to claim 7, further comprising determining the position or orientation rotation quantity by:

projecting a minimum sphere that encloses the three-dimensional model of the object as a circle on a screen; determining, according to the circle, a first vector of a starting operation point of position or orientation rotation on the screen in an annotation space and a second vector of an ending operation point of the position or orientation rotation on the screen in the annotation space;

determining a rotation axis and a rotation angle from the first vector to the second vector; and

transforming the rotation axis and the rotation angle into a rotation matrix as the position or orientation rotation quantity.

10. The image annotation method according to claim 7, further comprising determining the position or orientation offset by:

weighting a position or orientation adjustment component in each direction of the screen with a preset coefficient in the direction, to obtain a position or orientation offset component in each direction of the screen;

taking a matrix formed by the position or orientation offset components in various directions of the screen as the position or orientation offset.

11. The image annotation method according to claim 6, wherein determining the fifth coordinate representation of the three-dimensional model of the object under the adjusted position and orientation in the screen coordinate system comprises:

multiplying a pre-configured screen conversion matrix, a pre-configured clip matrix and a pre-configured projection matrix with the fourth coordinate representation of the three-dimensional model of the object under the adjusted position and orientation in the camera coordinate system in sequence, to obtain the fifth coordinate representation of the three-dimensional model of the object under the adjusted position and orientation in the screen coordinate system.

12. The image annotation method according to claim 5, wherein determining the third coordinate representation of the three-dimensional model of the object under the initial position and orientation in a screen coordinate system comprises:

multiplying a pre-configured screen conversion matrix, a pre-configured clip matrix and a pre-configured projection matrix with the second coordinate representation of the three-dimensional model of the object under the initial position and orientation in the camera coordinate system in sequence, to obtain the third coordinate representation of the three-dimensional model of the object under the initial position and orientation in the screen coordinate system.

13. An image annotation apparatus, comprising:

a memory; and

a processor coupled to the memory, the processor configured to perform the image annotation method according to any of claims 1-12 based on instructions stored in the memory.

14. An image annotation apparatus, comprising: modules for performing the image annotation method according to any of claims 1-12.

15. A non-transitory computer-readable storage medium storing a computer program which, when executed by a processor, performs the image annotation method according to any of claims 1-12.

16. A computer program, comprising:

instructions which, when executed by a processor, cause the processor to perform the image annotation method according to any of claims 1-12.

```
┌─────────────────┐      ┌──────────────────────────────────────────────────┐
│  multi-view     │      │  a three-dimensional model of an object is       │── 110
│  picture set of │─────▶│  constructed based on a multi-view picture set of │
│  object         │      │  the object                                       │
└─────────────────┘      └──────────────────────────────────────────────────┘
                                              │
                                              ▼
┌─────────────────┐      ┌──────────────────────────────────────────────────┐
│ to-be-annotated │      │  a position or orientation of the three-dimensional│── 120
│ picture of      │─────▶│  model of the object is adjusted to make a projection│
│ object          │      │  of the three-dimensional model of the object on a │
└─────────────────┘      │  to-be-annotated picture fully align with an image of│
                         │  the object in the to-be-annotated picture         │
                         └──────────────────────────────────────────────────┘
                                              │
                                              ▼
                         ┌──────────────────────────────────────────────────┐
                         │  the fully aligned projection is annotated as a    │── 130
                         │  segmentation result of the image of the object in │
                         │  the to-be-annotated picture                       │
                         └──────────────────────────────────────────────────┘
```

Fig.1

## 110

```
┌──────────────────────────────────────────────────┐
│  camera intrinsic parameters and camera extrinsic │── 110-1
│  parameters corresponding to each picture of the  │
│  object in the multi-view picture set of the object│
│  are determined                                    │
└──────────────────────────────────────────────────┘
                        │
                        ▼
┌──────────────────────────────────────────────────┐
│  the three-dimensional model of the object is     │── 110-2
│  constructed by using a reconstruction algorithm  │
│  from two-dimensional pictures to the three-       │
│  dimensional model, according to the each picture  │
│  of the object in the multi-view picture set of the│
│  object and the camera intrinsic parameters and the│
│  camera extrinsic parameters corresponding to the  │
│  each picture                                      │
└──────────────────────────────────────────────────┘
```

Fig.2

**120**

| a first projection of the three-dimensional model of the object under an initial position and orientation on the to-be-annotated picture is determined | **120-1** |

Not fully aligned

| the position or orientation of the three-dimensional model of the object is adjusted, and a second projection of the three-dimensional model of the object under an adjusted position and orientation on the to-be-annotated picture is determined, until the second projection fully align with the image of the object in the to-be-annotated picture | **120-2** |

FIG.3

FIG.4

FIG.5

600

620

processor

630

input/output
interface

660

bus

610

memory

640

network
interface

650

storage
interface

FIG.6

700

model
constructing
module

710

annotation
adjusting module

720

annotation
outputting
module

730

FIG.7

## INTERNATIONAL SEARCH REPORT

| International application No. |
| --- |
| **PCT/CN2024/123414** |

| A. | CLASSIFICATION OF SUBJECT MATTER |
| --- | --- |

G06T 7/11(2017.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

USTXT; VEN; CNABS; CNTXT; EPTXT; WOTXT; CNKI; IEEE: 图像, 标注, 对象, 多视角, 三维模型, 位姿, 投影, 重合, 分割, image, label, object, multi-view, three-dimensional model, pose, projection, overlap, segment

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 117372457 A (BEIJING WODONG TIANJUN INFORMATION TECHNOLOGY CO., LTD. et al.) 09 January 2024 (2024-01-09) claims 1-15, and description, paragraphs 50-168 | 1-16 |
| X | CN 111127422 A (MEGVII TECHNOLOGY LTD.) 08 May 2020 (2020-05-08) description, paragraphs 30-92 | 1-4, 13-16 |
| X | CN 111832648 A (BEIJING BAIDU NETCOM SCIENCE AND TECHNOLOGY CO., LTD.) 27 October 2020 (2020-10-27) description, paragraphs 35-93 | 1-4, 13-16 |
| A | CN 115937486 A (BEIJING WODONG TIANJUN INFORMATION TECHNOLOGY CO., LTD. et al.) 07 April 2023 (2023-04-07) description, paragraphs 6-21 | 1-16 |
| A | CN 112652071 A (XIAMEN MEITUZHIJIA TECHNOLOGY CO., LTD.) 13 April 2021 (2021-04-13) entire document | 1-16 |
| A | US 10937237 B1 (ADOBE INC.) 02 March 2021 (2021-03-02) entire document | 1-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 January 2025** | **11 January 2025** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/123414**

| Patent document cited in search report | | | Publication date (day/month/year) | Patent family member(s) | | | Publication date (day/month/year) |
|---|---|---|---|---|---|---|---|
| CN | 117372457 | A | 09 January 2024 | None | | | |
| CN | 111127422 | A | 08 May 2020 | CN | 111127422 | B | 04 June 2024 |
| CN | 111832648 | A | 27 October 2020 | CN | 111832648 | B | 09 February 2024 |
| CN | 115937486 | A | 07 April 2023 | None | | | |
| CN | 112652071 | A | 13 April 2021 | None | | | |
| US | 10937237 | B1 | 02 March 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311384713